# EUROPEAN PATENT SPECIFICATION

(11) **EP 3 388 314 B1**
(45) Date of publication and mention of the grant of the patent: **09.06.2021**
(21) Application number: 18167367.4
(22) Date of filing: 13.04.2018
(51) Int. Cl.: B62D 25/16, B60R 21/34

(54) **RETAINING DEVICE FOR ATTACHING A PART TO A VEHICLE**
HALTEVORRICHTUNG ZUM BEFESTIGEN EINES TEILS AN EINEM FAHRZEUG
DISPOSITIF DE FIXATION PERMETTANT DE FIXER UNE PIÈCE SUR UN VÉHICULE

(30) Priority: 14.04.2017 IT 201700042119
(43) Date of publication of application: 17.10.2018
(73) Proprietor: IVECO FRANCE S.A.S., 69200 Vénissieux (FR)
(72) Inventor: FOULONNEAU, Benoit, 49300 CHOLET (FR)
(74) Representative: Bongiovanni, Simone

(56) References cited:
- DE-B3-102006 029 351
- US-A1- 2010 314 518
- US-A1- 2017 029 032

## Description

The present invention relates to a vehicle comprising a cover and a retaining device configured for attaching said cover to an external wall and/or to the chassis of the vehicle.

Public passenger transport vehicles, for example buses, are increasingly manufactured with particular attention to their design.

An important feature for the design of buses is to conceal the presence of the vehicle's wheels, for example by attaching a part, for example a wheel-arch cover, configured to conceal the wheels.

However, the vehicle's wheels can deflagrate due to wheel tyre wear or due to the tyre being pierced by an object. The deflagration of a heavy vehicle tyre is sudden and very powerful because of the high-pressure air inside the tyre which is suddenly ejected following the rupture of the tyre.

The cover could thus be projected into the surroundings and may cause damage to people and objects.

Usually parts are mounted onto the vehicle using bolts to make disassembly possible in order to change the wheel. However, these bolts may also essentially become projectiles in the event of a deflagration.

Example of energy-absorbing means configured to attach parts to a vehicle are disclosed in documents DE102006029351 B3, US2017029032 A1 or US2010314518 A1. Specifically, DE102006029351 B3 discloses a retaining device configured for attaching a part to a chassis of a vehicle, said device comprising a bracket provided with a first portion configured to be attached to said part and two second portions configured to be attached to said chassis.

It is thus necessary to improve the reliability of the attaching of parts positioned close to the tyres of vehicle wheels.

The objects of this invention are to resolve the above-mentioned problems.

The above-mentioned objects are achieved by a vehicle according to claim 1.

Other characteristics and advantages of the invention will become apparent from the following non-limiting description, provided for illustrative purposes, with reference to the attached drawings in which:
- Figure 1 is a side view showing a portion of a vehicle comprising a part attached to the vehicle using a retaining device according to the invention;
- Figure 2 is a perspective view of a retaining device according to the invention; and

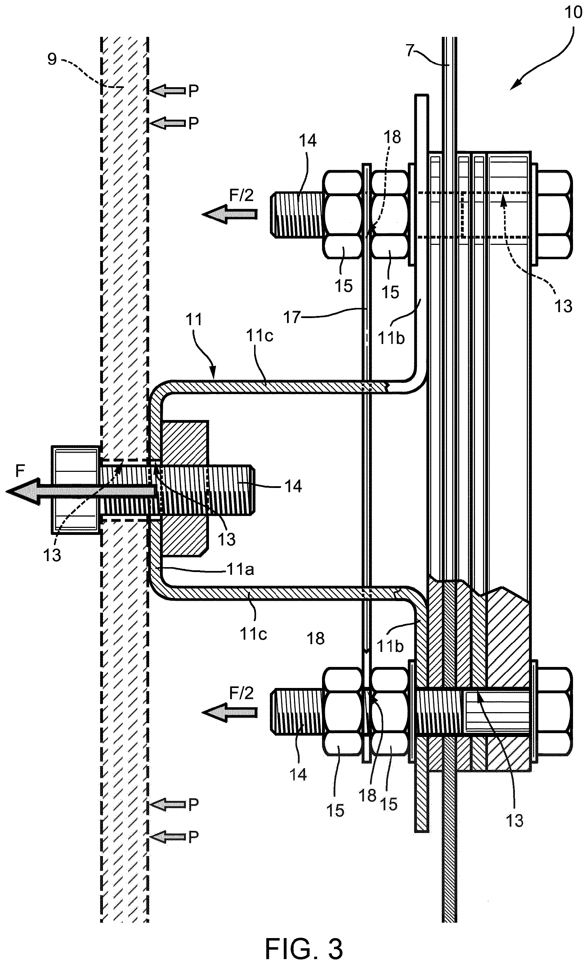

- Figure 3 is a schematic section view of the device of Figure 2.

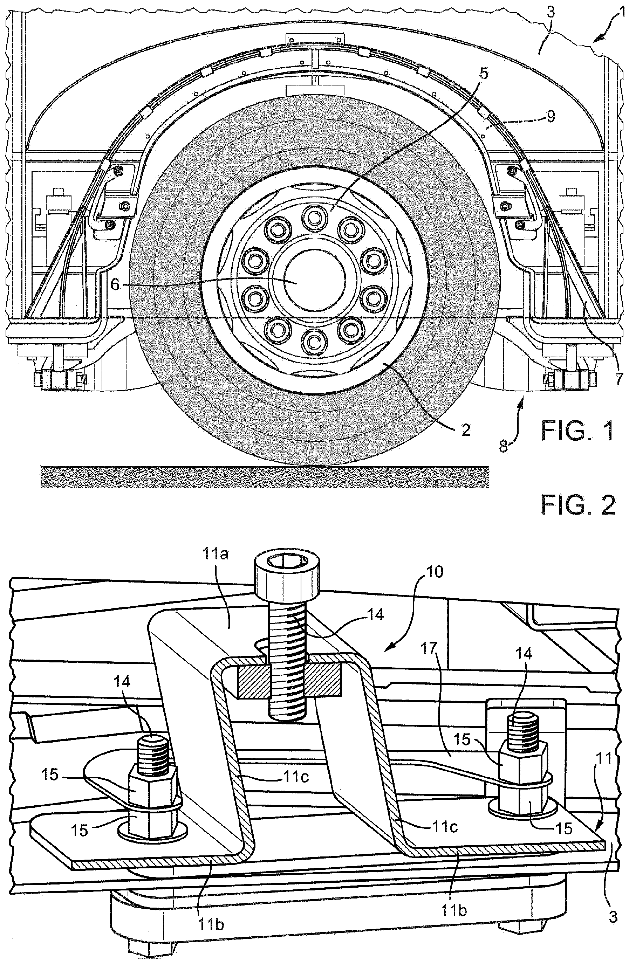

Figure 1 shows a side portion of a vehicle 1 for the public transport of passengers, for example a bus, comprising a wheel 2, provided with a tyre and positioned in a housing formed in a side wall 3 of the vehicle.

The wheel 2 is connected in a known way to a hub 5 fixed with respect to an axle 6 of the vehicle 1. The axle 6 is beneficially connected to the chassis 7 of the vehicle 1 by means of a suspension 8 of known type.

In the region of the wheel 2, a wheel-arch cover 9 may be attached, preferably to the side wall 3 of the vehicle 1, the cover 9 having a shape such as to cover at least half of the wheel 2 so that the wheel cannot be seen from the exterior. The cover 9 may have any shape, for example round or substantially semi-circular, and is positioned facing the wheel 2.

The cover 9 is beneficially attached to the side wall 3 and/or the chassis 7 of the vehicle 1 using a retaining device 10 according to the invention.

The retaining device 10 is configured so as to attach the cover 9 to the vehicle 1 and, at the same time, if the wheel 2 explodes, to absorb part of the deflagration of the tire of the wheel 2 which impacts the cover 9.

Beneficially, the retaining device 10 (see Figure 2) essentially comprises a bracket 11 configured to connect the cover 9 to the vehicle 1 and configured to absorb part of the energy from a deflagration of the tyre of the wheel 2 before itself breaking.

The bracket 11 preferably comprises a first portion 11a configured to be attached to the cover 9, a second portion 11b configured to be attached to the vehicle 1 and a third connecting portion 11c between the first portion 11a and the second portion 11b.

For example, the bracket 11 can be made in an "omega" shape comprising a central portion 11a suitable to be attached to the cover 9, two intermediate portions 11c each extending perpendicularly to the portion 11a as well as two side portions 11b, each extending perpendicularly to the respective portion 11b and parallel to the central portion 11a and suitable to be attached to the vehicle 1.

The central portion 11a and both of the side portions 11b each comprise a hole 13 configured to receive a bolt 14 configured to attach the bracket 11 respectively to the cover 9 and to the vehicle 1, thanks to a nut 15.

The cover 9 is preferably attached to the vehicle 1 by at least one retaining device 10, even more preferably by two retaining devices 10 positioned on opposite portions of the cover 9.

The retaining device 10 may also beneficially comprise a connecting part 17 configured to link together the bolts 14 which secure the side portions 11b to the side wall 3.

The connecting part 17 may be a "C"-shaped plate arranged in a plane substantially perpendicular to the axis of the bolts 14 and comprising, at each of its ends, a mounting hole 18, configured to accommodate one of the bolts 14 which secure the side portions 11b to its interior.

The bracket 11 as well as the connecting part 17 are both preferably made from a material configured to deform and to resist tension, for example metal, preferably steel.

The dimensions of the bracket 11 and the connecting part 17 are designed to ensure that breaking of the bracket 11 takes place in the intermediate portions 11c at a predefined force F acting between the central portion 11a and the side portions 11b.

The retaining device 10 functions as follows.

When the tyre of the wheel 2 deflagrates, a pressure P acts on the cover 9 and therefore a tensile force F acts between the central portion 11a and the side portions 11b.

The connecting part 17 distributes the force F equally between the two bolts 14 so as to increase the resistance of the bracket 11.

When a predetermined force F is attained, the bracket breaks, beneficially in at least one of the intermediate portions 11c. In this way, the energy of deflagration can be absorbed by the bracket 11, preventing a dangerous ejection of the cover 9.

From the foregoing, the benefits of the retaining device according to the present invention are apparent.

The retaining device 10 makes it possible for part of the energy of deflagration of the tyre of the wheel 2 to be absorbed and to decrease the energy of ejection of the cover 9.

In addition, the retaining device 10 makes it possible to retain the bolts 14 linked to the central portions 11a and side portions 11b of the bracket, so that they do not become "projectiles" ejected into the surroundings.

The retaining device 10 further allows the use of bolts which make it possible to easily attach and remove the cover when necessary.

Finally, it is apparent that the device according to the present invention may be subject to modifications and variations without thereby departing from the protective scope of the claims.

For example, the bracket 11 could have only one side portion 11b or it could have more than two side portions 11b.

The shape of the connecting part 17 could also be different without changing its function.

Finally, rivets could be used instead of the threaded means.

## Claims

1. Vehicle (1) comprising a wheel cover (9) and a retaining device (10) configured for attaching said wheel cover (9) to an external wall (3) and/or to the chassis (7) of said vehicle (1), said device (10) comprising a bracket (11) provided with a first portion (11a) configured to be attached to said wheel cover (9) and at least one second portion (11b) configured to be attached to said external wall (3) and/or to said chassis (7), wherein said bracket (11) is configured to break in an intermediate portion (11c) between said first portion (11a) and said at least one second portion (11b) when a predetermined tensile force is applied between said first portion (11a) and said at least one said second portion (11b).

2. Vehicle according to claim 1, wherein said bracket (11) is substantially "omega"-shaped essentially comprising a first portion (11a) and two second portions (11b), each of which being connected to said first portion (11a) by means of an intermediate portion (11c), said first portion (11a) being configured to be attached to said wheel cover (9) and the two second portions (11b) being configured to be attached to said external wall (3) and/or to said chassis (7) of said vehicle (1).

3. Vehicle according to claim 2, wherein said first portion (11a) and said second portions (11b) are attached to the respective parts (9; 3, 7) by means of threaded means (14).

4. Vehicle according to claim 3, wherein it comprises a connecting part (17) configured to connect the threaded means (14) that attach said second portions (11b) to said external wall (3) and/or to said chassis (7) of said vehicle (1).

5. Vehicle according to claim 4, wherein said connecting part (17) is a substantially "C"-shaped plate and is positioned on a flat part substantially perpendicular with respect to the threaded means (14).

## Patentansprüche

1. Fahrzeug (1), umfassend eine Radabdeckung (9) und eine Haltevorrichtung (10), ausgeführt, um die Radabdeckung (9) an eine Außenwand (3) und/oder am Chassis (7) des Fahrzeugs (1) zu befestigen, wobei die Vorrichtung (10) eine Klammer (11) umfasst, mit einem ersten Abschnitt (11a), der ausgeführt ist, um an der Radabdeckung (9) befestigt zu werden, und mindestens einem zweiten Abschnitt (11b), der ausgeführt ist, um and der Außenwand (3) und/oder dem Chassis (7) befestigt zu werden, wobei die Klammer (11) ausgeführt ist, um in einem mittleren Abschnitt (11c) zwischen dem ersten Abschnitt (11a) und dem mindestens einen zweiten Abschnitt (11b) zu brechen, wenn eine vorbestimmte Zugkraft zwischen dem ersten Abschnitt (11a) und dem mindestens einem zweiten Abschnitt (11b) aufgebracht wird.

2. Fahrzeug nach Anspruch 1, wobei die Klammer (11) im Wesentlichen "omega"förmig ist und im Wesentlichen einen ersten Abschnitt (11a) und zwei zweite Abschnitte (11b) umfasst, von denen jeder mit dem ersten Abschnitt (11a) durch einen mittleren Abschnitt (11c) verbunden ist, wobei der erste Abschnitt (11a) ausgeführt ist, um an der Radabdeckung (9) befestigt zu werden und die beiden zweiten Abschnitte (11b) ausgeführt sind, um an der Außenwand (3) und/oder dem Chassis (7) des Fahrzeugs (1) befestigt zu werden.

3. Fahrzeug nach Anspruch 2, wobei der erste Abschnitt (11a) und die zweiten Abschnitte (11b) durch Gewindemittel (14) an ihren jeweiligen Teilen (9; 3, 7) befestigt sind.

4. Fahrzeug nach Anspruch 3, welches ein Verbindungsteil (17) umfasst, das ausgeführt ist, um die Gewindemittel (14), welche die zweiten Abschnitte (11b) an der Außenwand und/oder dem Chassis (7) des Fahrzeugs (1) befestigen, zu verbinden.

5. Fahrzeug nach Anspruch 4, bei welchem das Verbindungsteil (17) ein im Wesentlichen "C"-förmiges Teil ist und auf einem flachen Abschnitt im Wesentlichen senkrecht in Bezug auf die Gewindemittel (14) angeordnet ist.

## Revendications

1. Véhicule (1) comprenant un élément de recouvrement de roue (9) et un dispositif de retenue (10) configuré pour attacher ledit élément de recouvrement de roue (9) à une paroi externe (3) et/ou au châssis (7) dudit véhicule (1), ledit dispositif (10) comprenant un support (11) doté d'une première portion (11a) configurée pour être attachée audit élément de recouvrement de roue (9) et au moins une seconde portion (11b) configurée pour être attachée à ladite paroi externe (3) et/ou audit châssis (7), dans lequel ledit support (11) est configuré pour rompre dans une portion intermédiaire (11c) entre ladite première portion (11a) et ladite au moins une seconde portion (11b) lorsqu'une force de traction prédéterminée est appliquée entre ladite première portion (11a) et ladite au moins une dite seconde portion (11b).

2. Véhicule selon la revendication 1, dans lequel ledit support (11) est sensiblement en forme d'« oméga » comprenant essentiellement une première portion (11a) et deux secondes portions (11b), chacune étant raccordée à ladite première portion (11a) au moyen d'une portion intermédiaire (11c), ladite première portion (11a) étant configurée pour être attachée audit élément de recouvrement de roue (9) et les deux secondes portions (11b) étant configurées pour être attachées à ladite paroi externe (3) et/ou audit châssis (7) dudit véhicule (1).

3. Véhicule selon la revendication 2, dans lequel ladite première portion (11a) et lesdites secondes portions (11b) sont attachées aux parties respectives (9 ; 3, 7) par des moyens filetés (14).

4. Véhicule selon la revendication 3, dans lequel il comprend une partie de raccordement (17) configurée pour raccorder les moyens filetés (14) qui attachent lesdites secondes portions (11b) à ladite paroi externe (3) et/ou audit châssis (7) dudit véhicule (1).

5. Véhicule selon la revendication 4, dans lequel ladite partie de raccordement (17) est une plaque sensiblement en forme de « C » et est positionnée sur une partie plate sensiblement perpendiculaire aux moyens filetés (14).
